# EUROPÄISCHE PATENTSCHRIFT

(11) **EP 2 102 795 B1**
(45) Veröffentlichungstag und Bekanntmachung des Hinweises auf die Patenterteilung: **25.08.2010**
(21) Anmeldenummer: 07856424.2
(22) Anmeldetag: 06.12.2007
(51) Int. Cl.: G06K 17/00

(54) **HERSTELLUNG KARTENFÖRMIGER DATENTRÄGER**
PRODUCTION OF DATA CARRIERS IN THE FORM OF CARDS
FABRICATION DE SUPPORTS DE DONNÉES EN FORME DE CARTES

(30) Priorität: 08.12.2006 DE 102006057949
(43) Veröffentlichungstag der Anmeldung: 23.09.2009
(73) Patentinhaber: Giesecke & Devrient GmbH, 81677 München (DE)
(72) Erfinder: BRUS, Bernd, 85659 Forstern (DE)
(74) Vertreter: Klunker . Schmitt-Nilson . Hirsch
(86) Internationale Anmeldenummer: PCT/EP2007/010619
(87) Internationale Veröffentlichungsnummer: WO 2008/068023

(56) Entgegenhaltungen:
- WO-A-02/077918
- US-B2- 7 093 767

## Beschreibung

Die Erfindung betrifft ein Verfahren zur Herstellung kartenförmiger Datenträger, insbesondere Chipkarten, und eine dazu geeignet eingerichtete Vorrichtung.

Kartenförmige Datenträger sind in verschiedenen genormten und teilweise auch nicht genormten Größen bekannt und kommen vielfältig zur Anwendung, beispielsweise im bargeldlosen Zahlungsverkehr, bei Zugangskontrollen, als Ausweisdokumente, als Berechtigungsnachweis im Mobilfunkbereich und dergleichen.

Die kartenförmigen Datenträger sind häufig mehrschichtig aufgebaut. Der mehrschichtige Kartenkörper kann beispielsweise aus einem Kartengrundbogen herausgelöst werden, welcher durch Laminieren, d.h. durch Verbinden von mehreren, im Allgemeinen großformatigen Folien, gebildet wird. Das verleiht dem Kartenkörper eine große Festigkeit. Der so gebildete Kartengrundbogen kann bedruckt werden, bevor ein Kartenkörper im gewünschten Endformat, beispielsweise durch Stanzen, herausgelöst wird. Auch eine Herstellung des Kartengrundbogens im Spritzgussverfahren ist möglich.

Ein als Chipkarte ausgebildeter kartenförmiger Datenträger besitzt einen integrierten Schaltkreis, der üblicherweise in eine Kavität des Datenträgers eingesetzt und dort beispielsweise verklebt wird. Die Kavität kann ausgefräst sein oder im Fall der Spritzgussherstellung bewusst ausgespart bleiben. Der integrierte Schaltkreis kann nach ISO-Norm sechs oder acht Kontakte zur kontaktbehafteten Kommunikation umfassen. Alternativ oder zusätzlich kann er zur kontaktlosen Kommunikation mit einem Lesegerät über eine in dem Kartenkörper integrierte Antenne eingerichtet sein.

In einem Initialisierungsschritt wird ein Speicher des integrierten Schaltkreises mit Allgemeindaten ausgestattet, die für alle Datenträger desselben Typs gleich sind. In einem Personalisierungsschritt werden speziell auf den Endnutzer angepasste Daten in den Schaltkreis des Datenträgers eingebracht.

Der Personalisierungsschritt kann auch eine Personalisierung des Kartenkörpers umfassen, indem beispielsweise der Name des Endnutzers auf den Datenträger aufgebracht wird, z.B. durch Bedrucken, Laserbeschriftung oder Prägen. Zusätzlich oder alternativ zum integrierten Schaltkreis können die Personalisierungsdaten auch auf einem Magnetstreifen in der Karte hinterlegt werden.

Schließlich kann der Datenträger noch mit Sicherheitsmerkmalen ausgestattet sein, beispielsweise mit einem Hologramm, um ihn gegen Fälschung und/oder missbräuchliche Nutzung zu schützen.

Kartenförmige Datenträger treten meist in ISO-genormten Formaten in Erscheinung. Das bekannteste und am häufigsten auftretende Format ID-1 bestimmt z.B. die Größe aller gängigen Kreditkarten, EC-Karten, Gesundheitskarten und dergleichen. Demgemäß sind praktisch alle Maschinen zur Herstellung von kartenförmigen Datenträgern auf dieses Format ausgerichtet. Eine Herstellung eines anderen Formats, z.B. des ID-000 Formats, das für SIM-Karten von Mobilfunktelefonen bekannt ist, erfolgt nach dem Stand der Technik dadurch, dass in einem abschließenden Produktionsschritt das gewünschte Format, beispielsweise ID-000, in einen im Format ID-1 produzierten Datenträger vorgestanzt wird. Der Endnutzer kann dann vor Gebrauch des Datenträgers im gewünschten, kleinen Format diesen entlang der vorbereiteten Perforierung heraustrennen. Auch die Herstellung von Datenträgern in nicht genormten Formaten kann auf diese Weise durchgeführt werden.

Beispielsweise offenbart US 7 093 767 B2 ein Verfahren zum Herstellen von kartenförmigen Datenträgern mit einem unregelmäßigen Umriss aus einem großformatigen Kartengrundbogen, wobei die Datenträger ein RFID-Modul (radio frequency identification) zur kontaktlosen Kommunikation enthalten. Zunächst werden so genannte Transportereinheiten mit einem RFID-Modul aus dem Kartengrundbogen hergestellt. Die Transportereinheiten weisen ein ISO-genormtes Format auf und können daher mit derzeit gängigen Maschinen hergestellt werden. Dann wird der unregelmäßige Umriss des Datenträgers derart in die Transportereinheit eingebracht, beispielsweise durch Stanzen, dass der Datenträger das RFID-Modul umfasst und leicht aus der Transportereinheit herausgetrennt werden kann.

Diese Verfahren haben den Nachteil, dass eine Herstellung von Datenträgern mit anderen als den genormten Formaten, auf die die Maschinen ausgerichtet sind, stets mit überschüssigem Material und damit hohen Kosten und hoher Umweltbelastung verbunden sind. Weiterhin beanspruchen die vorgestanzten Datenträger vor ihrer Auslieferung an den Endnutzer, also vor dem Heraustrennen des endgültigen, kleineren Formats, mehr Lagerplatz als notwendig.

Vielfach werden die einzelnen, vorstehend beschriebenen Produktionsschritte von verschiedenen, separaten Maschinen durchgeführt, die von verschiedenen Herstellern kommen können. Der Produktionsprozess ist damit dezentral und verlangt für jede Maschine einen separaten Konfigurationsaufwand, vor allem bei einer Produktionsumstellung. Dies ist mit hohen Kosten wegen des hohen Personalbedarfs und mit hoher Fehleranfälligkeit verbunden. Ein modulares Datenträgerfertigungssystem, in dem die einzelnen Bearbeitungsstationen modular in die Anlage integriert werden können und zentral gesteuert sind, ist in EP 0 672 281 B1 offenbart. Eine Fertigung von Datenträgern verschiedener Formate ist in dieser Schrift nicht vorgesehen.

Die Merkmale des Oberbegriffs des Anspruchs 6 sind aus dem Dokument US-B2-7 093 767 bekannt.

Aufgabe der vorliegenden Erfindung ist es, ein Verfahren und eine Vorrichtung zur effizienten Herstellung von kartenförmigen Datenträgern mit variablem Format bereitzustellen.

Diese Aufgabe wird durch ein Verfahren und eine Vorrichtung mit den Merkmalen der nebengeordneten Ansprüche gelöst. In davon abhängigen Ansprüchen sind vorteilhafte Ausgestaltungen und Weiterbildungen der Erfindung angegeben.

Grundgedanke der Erfindung ist es, einzelne oder vorzugsweise alle Bearbeitungsschritte zur Herstellung der Datenträger auf einem großformatigen Grundbogen durchzuführen, bevor die Datenträger aus dem Kartengrundbogen herausgetrennt werden, wobei zu Beginn des Bearbeitungsprozesses zunächst optimierte Platzierungen der herzustellenden Datenträger auf dem Kartengrundbogen abhängig von den jeweils herzustellenden Datenträgerformaten berechnet werden. Auf diese Weise lässt sich die aus einem Kartengrundbogen erzielbare Datenträgeranzahl optimieren, d.h. maximieren. Die Bearbeitungsstationen sind dementsprechend variabel einstellbar, so dass die Bearbeitungsschritte entsprechend der bestimmten Platzierungen am Kartengrundbogen ausgeführt werden können. Gesteuert wird der Ablauf vorzugsweise zentral.

Gemäß dem erfindungsgemäßen Verfahren werden dazu ausgehend von Daten, die die Herstellung einer Mehrzahl von kartenförmigen Datenträgern betreffen und Daten über die Umrisse der herzustellenden Datenträger umfassen, zunächst die Platzierungen der Datenträger auf dem Kartengrundbogen nach Position und Orientierung abhängig von den Umrissen der Datenträger bestimmt. Auf der Basis der so bestimmten Platzierungen werden Positionierungsdaten für eine oder mehrere Bearbeitungsstationen bestimmt, deren Bearbeitungswerkzeuge relativ zum Kartengrundbogen variabel einstellbar sind. Alternativ kann die Aufnahme für den Kartengrundbogen relativ zu den Bearbeitungswerkzeugen einstellbar sein. Der Kartengrundbogen wird dann abhängig von den so gewonnenen Positionierungsdaten mittels der Bearbeitungsstationen bearbeitet.

Die erfindungsgemäße Vorrichtung umfasst zusätzlich zu den variabel einstellbaren Bearbeitungsstationen eine Steuereinrichtung mit einer Platzierungsbestimmungseinheit. Die Steuereinrichtung ist eingerichtet, die Bearbeitungsstationen gemäß der von der Platzierungsbestimmungseinheit bestimmten Platzierungen zu steuern. Die Bearbeitungsstationen sind demgemäß eingerichtet, von der Steuereinheit flexibel in Abhängigkeit von den Platzierungen der kartenförmigen Datenträger auf dem Kartengrundbogen eingestellt zu werden. Ihre Werkzeuge lassen sich entsprechend variabel positionieren.

Auf diese Weise ergibt sich ein Verfahren zur effektiven Herstellung von kartenförmigen Datenträgern mit variablem Format. Die gewünschten Formate der herzustellenden Datenträger sind Teil der Eingabedaten und können somit vor jedem Produktionszyklus neu festgelegt werden. Somit können im Gegensatz zum Stand der Technik beliebige Formate vorgegeben werden. Die die eigentlichen Datenträger umfassenden Transportereinheiten in genormten Standardformaten sind nicht mehr notwendig. Verschiedene auf dem Kartengrundbogen herzustellende Datenträger können dabei durchaus unterschiedliche Umrisse besitzen, wodurch es beispielsweise möglich wird, in einem Produktionszyklus verschiedenformatige Datenträger herzustellen. Das Konfigurieren der Bearbeitungsstationen vor jedem neuen Produktionszyklus kann dank der zentralen Steuerung zum Großteil automatisch erfolgen, wodurch eine kostengünstige Produktion ermöglicht wird.

Vorzugsweise wird die Positionierung der herzustellenden Datenträger auf dem Kartengrundbogen derart vorgenommen, dass eine möglichst große Anzahl von Datenträgern aus dem Kartengrundbogen gefertigt werden kann. Dadurch werden Material und somit Kosten gespart und die Umwelt entlastet.

Nach einem oder mehreren Bearbeitungsschritten an den herzustellenden Datenträgern auf dem Kartengrundbogen werden die Datenträger vereinzelt, beispielsweise durch Stanzen, um dadurch die Datenträger in ihren Endformaten zu erhalten. Der Schritt des Vereinzelns kann von den eigentlichen Bearbeitungsschritten entkoppelt sein, wenn beispielsweise die teilweise oder fertig bearbeiteten Kartengrundbogen als Halbfabrikate gehandelt werden.

Die Bearbeitungsschritte am Kartengrundbogen können einen oder mehrere der folgenden Schritte enthalten: Bedrucken des Kartengrundbogens, Ausbilden mindestens einer Kavität im Kartengrundbogen, Einsetzen eines integrierten Schaltkreises in eine Kavität des Kartengrundbogens, Initialisieren mindestens eines im Kartengrundbogen integrierten Schaltkreises, Personalisieren mindestens eines im Kartengrundbogen integrierten Schaltkreises, Ausstatten des Kartengrundbogens mit Sicherheitsmerkmalen. Demgemäß kann die erfindungsgemäße Vorrichtung eine oder mehrere der folgenden Bearbeitungsstationen umfassen: Frässtation zum Bilden mindestens einer Kavität im Kartengrundbogen, Implantierstation zum Einsetzen eines integrierten Schaltkreises in eine Kavität des Kartengrundbogens, Druckstation zum Bedrucken des Kartengrundbogens, Laserstation zum Einbringen einer Lasergravur in eine Oberfläche des Kartengrundbogens, Prägestation zum Prägen von beispielsweise Sicherheitsmerkmalen in den Kartengrundbogen, elektronische Bearbeitungsstation zum Einbringen von Daten in mindestens einen im Kartengrundbogen integrierten Schaltkreises zum Initialisieren und/oder Personalisieren des Schaltkreises, Magnetstreifenstation zum Aufbringen und Beschreiben mindestens eines Magnetstreifens auf den Kartengrundbogen, Vereinzelungsstation zum Vereinzeln von Datenträgern aus dem Kartengrundbogen, wie beispielsweise eine Stanzvorrichtung.

Vorzugsweise wird ein gleicher Bearbeitungsschritt an mehreren Datenträgern auf dem Kartengrundbogen gleichzeitig durchgeführt. Beispielsweise kann die elektronische Bearbeitungsstation zum Initialisieren und/oder Personalisieren der Schaltkreise mit einer Mehrzahl von Kontaktiereinheiten ausgestattet sein, um in dem Kartengrundbogen gleichzeitig eine Mehrzahl von Schaltkreisen initialisieren oder gleichzeitig eine Mehrzahl von Schaltkreisen personalisieren zu können. Dies ist insbesondere in dem zeitaufwendigen Initialisierungsschritt von Vorteil, weil durch Parallelbearbeitung die Gesamtbearbeitungszeit in diesem Schritt deutlich reduziert werden kann.

Vorzugsweise umfasst die Steuereinrichtung einen Personal Computer (PC), von dem aus die einzelnen Bearbeitungsstationen zentral gesteuert werden. Mit Hilfe des PCs können die Platzierungen der herzustellenden Datenträger auf dem Kartengrundbogen bestimmt, die Positionierungsdaten für die Bearbeitungsstationen daraus abgeleitet und die Bearbeitungsstationen entsprechend gesteuert werden.

Es kann vorgesehen sein, einzelne Bearbeitungsstationen der erfindungsgemäßen Vorrichtung zu Teilkomponenten zusammenzufassen, die dann räumlich getrennt von anderen Teilkomponenten aufgestellt werden können. Beispielsweise können Bearbeitungsschritte, die mit Lärmbelästigung einhergehen, in Räume ausgelagert werden, in denen kein oder nur sehr wenig Bedienpersonal davon betroffen ist. Eine geeignete Vernetzung mit der Steuereinheit lässt eine zentrale Steuerung weiterhin zu. Ein teilbearbeiteter Kartengrundbogen kann dann zwischen den verschiedenen Teilkomponenten ausgetauscht werden.

Nachfolgend wird die Erfindung anhand der begleitenden Zeichnungen beispielhaft beschrieben. Darin zeigen:
- Figur 1: eine schematische Darstellung einer Ausführungsform der erfindungsgemäßen Vorrichtung; und
- Figur 2: einen Kartengrundbogen mit Platzierungen für herzustellende Datenträger.

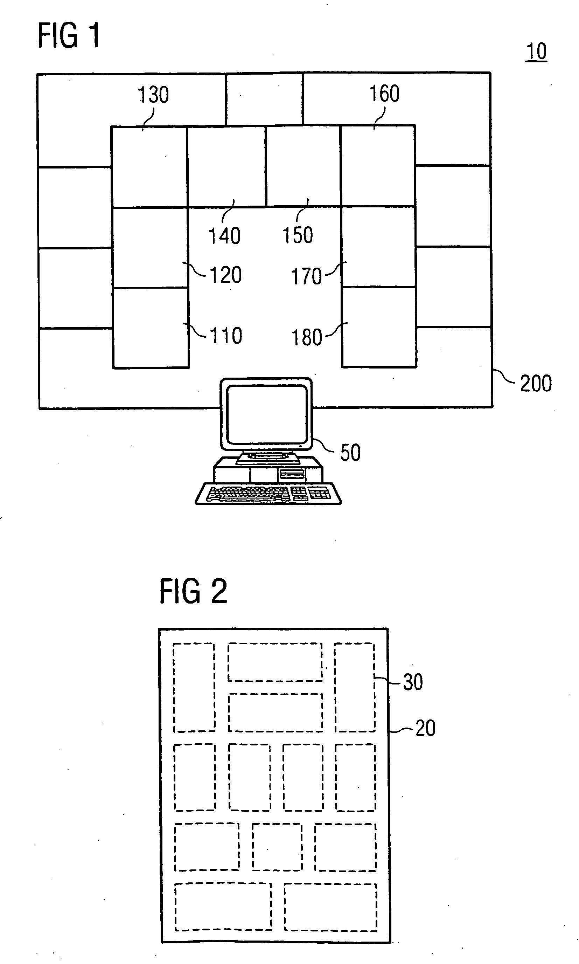

Figur 1 zeigt schematisch eine Vorrichtung 10 zum Herstellen von kartenförmigen Datenträgern aus einem Kartengrundbogen. Sie umfasst eine als PC ausgebildete Steuereinrichtung 50 und eine Mehrzahl von zu beschreibenden Bearbeitungsstationen 110, 120, 130, 140, 150, 160, 170, 180, die über ein Netzwerk 200 mit dem PC verbunden sind.

Über den PC wird der gesamte Produktionsprozess für die Datenträger gesteuert. Er empfängt Daten, die zur Herstellung der Datenträger aus einem Kartengrundbogen notwendig sind, insbesondere Daten über die Umrisse der herzustellenden Datenträger und über das Format des Kartengrundbogens, aber auch Daten, die ein Bedrucken, Beschriften, Prägen, Ausstatten mit digitalen Daten und dergleichen für die herzustellenden Datenträger definieren. Dem PC können diese Daten über ein Netzwerk übermittelt werden oder mittels eines tragbaren Datenträgers, wie beispielsweise einer CD oder einer DVD zugeführt werden. Mittels einer Platzierungsbestimmungseinheit, vorzugsweise eines Computerprogramms, werden Platzierungen der herzustellenden Datenträger auf dem Kartengrundbogen abhängig von ihren Umrissen berechnet. Dabei ist das Computerprogramm eingerichtet, die Platzierungen nach Ort und Orientierung derart zu bestimmen, dass die Materialausnutzung optimiert wird, dass also eine möglichst große Anzahl von herzustellenden Datenträgern aus einem Kartengrundbogen gefertigt werden kann. Auf Basis der so bestimmten Platzierungen erfolgt nun, wiederum mit Hilfe des PCs und eines dazu eingerichteten Positionierungsprogramms, die Positionierung der Bearbeitungsstationen bzw. ihrer Bearbeitungswerkzeuge relativ zum Kartengrundbogen und die Bearbeitung des Kartengrundbogens. Der nächstfolgende Kartengrundbogen kann dann je nach den Umrissen der herzustellenden Datenträger vollkommen anders bearbeitet werden.

Eine Frässtation 110 ist eingerichtet, Kavitäten in dem Kartengrundbogen zu bilden. Dabei wird ein Fräskopf von dem Positionierungsprogramm an die entsprechende Position auf dem Kartengrundbogen geführt. Die Kavität ist zum Einsetzen eines integrierten Schaltkreises in einen aus dem Kartengrundbogen herzustellenden Datenträger vorgesehen. Dementsprechend bestimmt sich die Position und Orientierung der Kavität aus der Platzierung des entsprechenden herzustellenden Datenträgers auf dem Kartengrundbogen und aus einer Information darüber, an welcher Stelle des herzustellenden Datenträgers ein integrierter Schaltkreis eingesetzt werden soll. Letztere Information ist in den eingangs dem PC übermittelten Daten enthalten. Der Fräskopf kann beispielsweise mittels zweier Laufschienen an die berechnete Position über dem Kartengrundbogen geführt und dann abgesenkt werden. Alternativ ist es denkbar, dass der Kartengrundbogen verschiebbar gelagert ist und von dem PC gesteuert so verschoben wird, dass die zu fräsende Position unter einem feststehenden Fräskopf zu liegen kommt.

Eine Implantierstation 120 ist eingerichtet, einen integrierten Schaltkreis in eine in dem Kartengrundbogen gebildete Kavität einzusetzen, vorzugsweise durch Kleben mittels eines von der Station dafür in die Kavität eingefüllten Klebstoffes. Der integrierte Schaltkreis befindet sich auf einem Band in der Implantierstation 120, aus welchem er vor dem Einsetzen in die Kavität ausgestanzt wird und welches eine Vielzahl gleichartiger integrierter Schaltkreise enthält.

Zum Bedrucken des Kartengrundbogens ist eine Druckstation 130 vorgesehen. Auch diese wird, wie alle Bearbeitungsstationen, von dem PC zentral gesteuert. Der Kartengrundbogen kann mit Allgemeindaten, die für alle aus dem Kartengrundbogen herzustellenden Datenträger gleich sind, bedruckt werden, beispielsweise einem Logo einer die Datenträger ausgebenden Institution. Aber auch das Bedrucken der herzustellenden Datenträger in dem Kartengrundbogen mit individuellen Informationen ist vorgesehen, beispielsweise mit dem Namen des Endnutzers des Datenträgers oder einer Seriennummer. Ist ein Bedrucken des Kartengrundbogens von beiden Seiten vorgesehen, so kann eine zweite Druckstation zum Bedrucken des Datenträgers von der anderen Seite der den Kartengrundbogen stützenden Vorrichtung installiert sein, oder aber der Kartengrundbogen wird gewendet und mittels der Druckstation 130 auf seiner zweiten Seite bedruckt.

Eine Laserstation 140 dient zum Einbringen von Information in eine Oberfläche des Kartengrundbogens. Entsprechend berechnete Positionen in den herzustellenden Datenträgern werden mittels Laserbeschriftung mit Personalisierungsdaten versehen, wie beispielsweise dem Namen des Endnutzers des herzustellenden Datenträgers.

Eine Prägestation 150 ist eingerichtet, den Kartengrundbogen zu Prägen. Auf diese Weise können beispielsweise die herzustellenden Datenträger mit Sicherheitsmerkmalen, wie Hologrammen oder Kippbildern, versehen werden. Auch ein Einprägen von Personalisierungsdaten in die herzustellenden Datenträger ist möglich.

Eine Magnetstreifenstation 160 versieht den Kartengrundbogen mit Magnetstreifen. Entsprechende, den herzustellenden Datenträgern gemäß ihrer Platzierung zuzuordnende Bereiche werden mit die entsprechenden Datenträger betreffenden Informationen beschriftet, beispielsweise mit Personalisierungsdaten.

Die elektronische Bearbeitungsstation 170 ist eingerichtet, über Kontaktiereinheiten Kontakte der in den Kartengrundbogen implantierten integrierten Schaltkreise zu kontaktieren und diese Schaltkreise mit digitalen Daten auszustatten. Auf diese Weise werden die Schaltkreise initialisiert und personalisiert.

Problematisch bei der elektronischen Bearbeitung von kastenförmigen Datenträgern mit einem integrierten Schaltkreis ist, dass die Bearbeitungszeiten zum Ausstatten der Datenträger mit Allgemeindaten während der Initialisierungsphase aufgrund steigender Datenmengen immer stärker wachsen. Bevorzugt ist die elektronische Bearbeitungsstation 170 deshalb mit einer Mehrzahl von Kontaktiereinheiten ausgestattet. Auf diese Weise können gleichzeitig eine Mehrzahl von integrierten Schaltkreisen auf dem Kartengrundbogen mit Daten ausgestattet werden, sowohl in der Personalisierungs- als auch in der Initialisierungsphase. Vor allem der Zeitaufwand für letztere wird durch eine auf diese Weise durchführbare parallele Initialisierung einer Mehrzahl von Schaltkreisen deutlich verringert. Die Kontaktiereinheiten sind dabei so eingerichtet, dass sie von dem PC einzeln und unabhängig positionierbar und mit Daten versorgbar sind.

Auch andere Bearbeitungsstationen können eingerichtet sein, mehrere herzustellenden Datenträger auf dem Kartengrundbogen gleichzeitig zu bearbeiten. Beispielsweise kann die Frässtation 110 mehrere Fräsköpfe besitzen, die gleichzeitig verschiedene Bereiche des Kartengrundbogens bearbeiten, oder die Prägestation 150 kann mit mehreren, unabhängig voneinander steuerbaren Prägeköpfen ausgerüstet sein.

Die Vereinzelungsstation 180 schließlich dient zur Vereinzelung der herzustellenden Datenträger aus dem Kartengrundkörper. Mit ihrer Hilfe werden die herzustellenden Datenträger nach der Bearbeitung des Kartengrundbogens gemäß ihrem Endformat aus dem Kartengrundbogen herausgetrennt, beispielsweise durch Stanzen, Schneiden oder dergleichen. Ein Behälter zum Aufnehmen der vereinzelten Datenträger kann unterhalb einer Vereinzelungsvorrichtung der Vereinzelungsstation vorgesehen sein.

Wie bei allen beschriebenen Bearbeitungsstationen erfolgt auch bei der Vereinzelungsstation die Positionierung des entsprechenden Werkzeugs der Station, hier beispielsweise einer Stanze, über dem Kartengrundbogen mittels des PCs unter Berücksichtigung der zunächst berechneten Platzierungen der herzustellenden Datenträger auf dem Kartengrundbogen und der zu Beginn dem PC übermittelten Daten betreffend die Herstellung der Mehrzahl der Datenträger, insbesondere also der Umrissdaten.

Figur 2 zeigt schematisch einen Kartengrundbogen 20 in Draufsicht mit durch gestrichelte Linien angedeuteten Platzierungen 30 von herzustellenden Datenträgern mit teilweise unterschiedlichen Umrissen. Die Platzierungen 30 sind dabei so berechnet, dass das Material des Grundbogens optimal ausgenutzt wird und eine maximale Anzahl von herzustellenden Datenträgern auf dem Kartengrundbogen platziert und daraus gefertigt werden kann.

## Patentansprüche

1. Verfahren zur Herstellung einer Mehrzahl von kartenförmigen Datenträgern aus einem großformatigen Kartengrundbogen (20), wobei der Umriss der kartenförmigen Datenträger variabel sein kann, umfassend die Schritte:
- Bereitstellen einer Steuereinrichtung (50) zur Steuerung des Herstellungsverfahrens,
- Zuführen von Daten betreffend die Herstellung einer Mehrzahl von Datenträgern, einschließlich Daten über die Umrisse der Datenträger an die Steuereinrichtung (50);
- Bestimmen von Platzierungen (30) auf dem Kartengrundbogen für die aus dem Kartengrundbogen herzustellenden Datenträger abhängig von den Umrissen der herzustellenden Datenträger durch die Steuereinrichtung (50);
- Bestimmen von Positionierungsdaten für eine oder mehrere variabel einstellbare Bearbeitungsstationen (110, 120, 130, 140, 150, 160, 170, 180) auf Basis der so bestimmten Platzierungen (30) durch die Steuereinrichtung (50);
- Bearbeiten des Kartengrundbogens (20) mittels der einen oder mehreren Bearbeitungsstationen (110, 120, 130, 140, 150, 160, 170, 180) abhängig von den Positionierungsdaten.

2. Verfahren nach Anspruch 1, **dadurch gekennzeichnet, dass** verschiedene der kartenförmigen Datenträger unterschiedliche Umrisse besitzen.

3. Verfahren nach Anspruch 1 oder 2, **gekennzeichnet durch** mindestens einen der folgenden Bearbeitungsschritte:
- Bedrucken des Kartengrundbogens (20);
- Ausbilden mindestens einer Kavität im Kartengrundbogen (20);
- Einsetzen eines integrierten Schaltkreises in eine Kavität des Kartengrundbogens (20);
- Initialisieren mindestens eines im Kartengrundbogen (20) integrierten Schaltkreises;
- Personalisieren mindestens eines im Kartengrundbogen (20) integrierten Schaltkreises;
- Ausstatten des Kartengrundbogens (20) mit Sicherheitsmerkmalen.

4. Verfahren nach einem der Ansprüche 1 bis 3, **dadurch gekennzeichnet, dass** ein gleicher Bearbeitungsschritt an mehreren Datenträgern im Kartengrundbogen (20) gleichzeitig durchgeführt wird.

5. Verfahren nach einem der Ansprüche 1 bis 4, **gekennzeichnet durch** den Schritt des Vereinzelns der Datenträger aus dem Kartengrundbogen (20) nach dem Schritt des Bearbeitens des Kartengrundbogens (20).

6. Vorrichtung (10) zur Herstellung von kartenförmigen Datenträgern aus einem großformatigen Kartengrundbogen (20), umfassend eine oder mehrere Bearbeitungsstationen (110, 120,130,140,150,160,170,180) zur Bearbeitung der herzustellenden Datenträger innerhalb des Kartengrundbogens (20) und eine Steuereinrichtung (50) zum Steuern der Bearbeitungsstationen (110,120, 130, 140, 150, 160, 170, 180), **dadurch gekennzeichnet, dass** die Steuereinrichtung (50) eine Platzierungsbestimmungseinheit umfasst, die eingerichtet ist, die Platzierung (30) von herzustellenden kartenförmigen Datenträgern auf dem Kartengrundbogen (20) in Abhängigkeit von den Umrissen der herzustellenden kartenförmigen Datenträger zu bestimmen, und dass die Steuereinrichtung (50) eingerichtet ist, die Bearbeitung des Kartengrundbogens an den Bearbeitungsstationen (110,120,130,140,150, 160, 170, 180) abhängig von derart bestimmten Platzierungen (30) zu steuern.

7. Vorrichtung (10) nach Anspruch 6, **gekennzeichnet durch** mindestens eine der folgenden Bearbeitungsstationen (110, 120, 130, 140, 150, 160, 170, 180):
- Frässtation (110) zum Bilden mindestens einer Kavität in einem Kartengrundbogen (20);
- Implantierstation (120) zum Einsetzen eines integrierten Schaltkreises in eine Kavität eines Kartengrundbogens (20);
- Druckstation (130) zum Bedrucken eines Kartengrundbogens (20);
- Laserstation (140) zum Einbringen einer Lasergravur in eine Oberfläche eines Kartengrundbogens (20);
- Prägestation (150) zum Prägen eines Kartengrundbogens (20);
- Magnetstreifenstation (160) zum Aufbringen und Beschreiben mindestens eines Magnetstreifens auf einen Kartengrundbogen (20);
- elektronische Bearbeitungsstation (170) zum Einbringen von Daten in mindestens einen in einem Kartengrundbogen (20) integrierten Schaltkreis zum Initialisieren und/oder Personalisieren des Schaltkreises;
- Vereinzelungsstation (180) zum Vereinzeln von Datenträgern aus einem Kartengrundbogen (20).

8. Vorrichtung (10) nach Anspruch 6 oder 7, **dadurch gekennzeichnet, dass** mindestens eine der Bearbeitungsstationen (110,120,130,140,150,160, 170, 180) eingerichtet ist, eine Mehrzahl von herzustellenden kartenförmigen Datenträgern in einem Kartengrundbogen (20) gleichzeitig zu bearbeiten.

9. Vorrichtung nach Anspruch 8, **dadurch gekennzeichnet, dass** die elektronische Bearbeitungsstation (170) eine Mehrzahl von variabel positionierbaren Kontaktiereinheiten zum gleichzeitigen Kontaktieren einer Mehrzahl von herzustellenden kartenförmigen Datenträgern in einem Kartengrundbogen (20) umfasst.

10. Vorrichtung nach einem der Ansprüche 6 bis 9, **dadurch gekennzeichnet, dass** die Steuereinrichtung (50) einen Personal Computer umfasst.

## Claims

1. A method for producing a plurality of card-shaped data carriers from a large-size card base sheet (20), wherein the outline of the card-shaped data carriers can be variable, comprising the steps of:
- providing a control device (50) for controlling the production method,
- supplying data relating to the production of a plurality of data carriers, including data about the outlines of the data carriers, to the control device (50);
- determining placements (30) on the card base sheet for the data carriers to be produced from the card base sheet, in dependence on the outlines of the data carriers to be produced, through the control device (50);
- determining positioning data for one or more variably adjustable processing stations (110, 120, 130, 140, 150, 160, 170, 180) on the basis of the thus determined placements (30) through the control device (50);
- processing the card base sheet (20) by means of the one or more processing stations (110, 120, 130, 140, 150, 160, 170, 180) in dependence on the positioning data.

2. The method according to claim 1, **characterized in that** different ones of the card-shaped data carriers possess different outlines.

3. The method according to claim 1 or 2, **characterized by** at least one of the following processing steps:
- printing the card base sheet (20);
- forming at least one cavity in the card base sheet (20);
- inserting an integrated circuit into a cavity of the card base sheet (20);
- initializing at least one circuit integrated in the card base sheet (20);
- personalizing at least one circuit integrated in the card base sheet (20);
- equipping the card base sheet (20) with security features.

4. The method according to any of claims 1 to 3, **characterized in that** a same processing step is carried out on a plurality of data carriers in the card base sheet (20) at the same time.

5. The method according to any of claims 1 to 4, **characterized by** the step of singling the data carriers from the card base sheet (20) after the step of processing the card base sheet (20).

6. An apparatus (10) for producing card-shaped data carriers from a large-size card base sheet (20), comprising one or more processing stations (110, 120, 130, 140, 150, 160, 170, 180) for processing the data carriers to be produced within the card base sheet (20), and a control device (50) for controlling the processing stations (110, 120, 130, 140, 150, 160, 170, 180), **characterized in that** the control device (50) comprises a placement determining unit which is adapted to determine the placement (30) of card-shaped data carriers to be produced on the card base sheet (20) in dependence on the outlines of the card-shaped data carriers to be produced, and **in that** the control device (50) is adapted to control the processing of the card base sheet at the processing stations (110, 120, 130, 140, 150, 160, 170, 180) in dependence on thus determined placements (30).

7. The apparatus (10) according to claim 6, **characterized by** at least one of the following processing stations (110, 120, 130, 140, 150, 160, 170, 180):
- milling station (110) for forming at least one cavity in a card base sheet (20);
- implanting station (120) for inserting an integrated circuit into a cavity of a card base sheet (20);
- printing station (130) for printing a card base sheet (20);
- laser station (140) for making a laser engraving into a surface of a card base sheet (20);
- embossing station (150) for embossing a card base sheet (20);
- magnetic-stripe station (160) for applying and writing on at least one magnetic stripe on a card base sheet (20);
- electronic processing station (170) for introducing data into at least one circuit integrated in a card base sheet (20) for initializing and/or personalizing the circuit;
- singling station (180) for singling data carriers from a card base sheet (20).

8. The apparatus (10) according to claim 6 or 7, **characterized in that** at least one of the processing stations (110, 120, 130, 140, 150, 160, 170, 180) is adapted to process a plurality of card-shaped data carriers to be produced in a card base sheet (20) at the same time.

9. The apparatus according to claim 8, **characterized in that** the electronic processing station (170) comprises a plurality of variably positionable contacting units for simultaneously contacting a plurality of card-shaped data carriers to be produced in a card base sheet (20).

10. The apparatus according to any of claims 6 to 9, **characterized in that** the control device (50) comprises a personal computer.

## Revendications

1. Procédé de fabrication d'une pluralité de supports de données en forme de cartes à partir d'une feuille de base à cartes (20) réalisée en grand format, le contour des supports de données en forme de cartes pouvant être variable, comprenant les étapes suivantes :
- mise à disposition d'un équipement de commande (50) pour la commande du procédé de fabrication,
- apport à l'équipement de commande (50) de données concernant la fabrication d'une pluralité de supports de données, y compris de données concernant les contours des supports de données ;
- détermination par l'équipement de commande (50), en fonction des contours des supports de données à fabriquer, de placements (30) sur la feuille de base à cartes pour les supports de données à fabriquer à partir de la feuille de base à cartes ;
- détermination, par l'équipement de commande (50), de données de positionnement pour une ou plusieurs stations de traitement variablement réglables (110, 120, 130, 140, 150, 160, 170, 180) sur la base des placements (30) ainsi déterminés ;
- traitement de la feuille de base à cartes (20) au moyen de la une ou des plusieurs stations de traitement (110, 120, 130, 140, 150, 160, 170, 180) en fonction des données de positionnement.

2. Procédé selon la revendication 1, **caractérisé en ce que** différents des supports de données en forme de cartes possèdent des contours différents.

3. Procédé selon la revendication 1 ou 2, **caractérisé par** au moins une des étapes de traitement suivantes :
- impression de la feuille de base à cartes (20);
- façonnage d'au moins une cavité dans la feuille de base à cartes (20);
- insertion d'un circuit intégré dans une cavité de la feuille de base à cartes (20);
- initialisation d'au moins un circuit intégré dans la feuille de base à cartes (20);
- personnalisation d'au moins un circuit intégré dans la feuille de base à cartes (20);
- installation de caractéristiques de sécurité dans la feuille de base à cartes (20);

4. Procédé selon une des revendications de 1 à 3, **caractérisé en ce qu'**une même étape de traitement est réalisée en même temps à plusieurs supports de données dans la feuille de base à cartes (20).

5. Procédé selon une des revendications de 1 à 4, **caractérisé par** l'étape consistant à détacher séparément les supports de données de la feuille de base à cartes (20) après l'étape du traitement de la feuille de base à cartes (20).

6. Dispositif (10) de fabrication de supports de données en forme de cartes à partir d'une feuille de base à cartes (20) réalisée en grand format, comprenant une ou plusieurs stations de traitement (110, 120, 130, 140, 150, 160, 170, 180) pour le traitement des supports de données à fabriquer à l'intérieur de la feuille de base à cartes (20) et un équipement de commande (50) pour commander les stations de traitement (110, 120, 130, 140, 150, 160, 170, 180), **caractérisé en ce que** l'équipement de commande (50) comprend une unité de détermination de placement équipée pour déterminer, en fonction des contours des supports de données en forme de cartes à fabriquer, le placement (30) sur la feuille de base à cartes (20) de supports de données en forme de cartes à fabriquer, et **en ce que** l'équipement de commande (50) est équipé pour commander le traitement de la feuille de base à cartes aux stations de traitement (110, 120, 130, 140, 150, 160, 170, 180) en fonction de placements (30) ainsi déterminés.

7. Dispositif (10) selon la revendication 6, **caractérisé par** au moins une des stations de traitement suivantes (110, 120, 130, 140, 150, 160, 170, 180):
- station de fraisage (110) pour la constitution d'au moins une cavité dans une feuille de base à cartes (20) ;
- station d'implantation (120) pour insérer un circuit intégré dans une cavité de la feuille de base à cartes (20);
- station d'impression (130) pour imprimer une feuille de base à cartes (20);
- station laser (140) pour réaliser une gravure laser dans une surface d'une feuille de base à cartes (20);
- station de gaufrage (150) pour gaufrer une feuille de base à cartes (20);
- station de piste magnétique (160) pour appliquer au moins une piste magnétique sur une feuille de base à cartes (20) et pour y enregistrer des données;
- station de traitement électronique (170) pour introduire des données dans au moins un circuit intégré dans une feuille de base à cartes (20) pour initialiser et/ou pour personnaliser le circuit ;
- station de détachement séparé (180) pour détacher séparément des supports de données d'une feuille de base à cartes (20).

8. Dispositif (10) selon la revendication 6 ou 7, **caractérisé en ce qu'**au moins une des stations de traitement (110, 120, 130, 140, 150, 160, 170, 180) est équipée pour traiter en même temps dans une feuille de base à cartes (20) une pluralité de supports de données en forme de cartes à fabriquer.

9. Dispositif selon la revendication 8, **caractérisé en ce que** la station de traitement électronique (170) comprend une pluralité d'unités de contact variablement positionnables pour la mise en contact simultanée, dans une feuille de base à cartes (20), d'une pluralité de supports de données en forme de cartes à fabriquer.

10. Dispositif selon une des revendications de 6 à 9, **caractérisé en ce que** l'équipement de commande (50) comprend un micro-ordinateur.
